# EUROPEAN PATENT SPECIFICATION

(11) **EP 2 744 249 B1**
(45) Date of publication and mention of the grant of the patent: **12.09.2018**
(21) Application number: 12871446.6
(22) Date of filing: 31.12.2012
(51) Int. Cl.: H04W 8/24, G06K 19/07, G06K 19/077

(54) **METHOD FOR ACTIVATING INSIM CHIP IN MOBILE TERMINAL AND MOBILE TERMINAL THEREFOR**
VERFAHREN ZUR AKTIVIERUNG EINES INSIM-CHIPS BEI EINEM MOBILEN ENDGERÄT UND MOBILES ENDGERÄT DAFÜR
PROCÉDÉ D'ACTIVATION DE PUCE INSIM DANS UN TERMINAL MOBILE ET TERMINAL MOBILE CORRESPONDANT

(30) Priority: 15.03.2012 CN 201210068102
(43) Date of publication of application: 18.06.2014
(73) Proprietor: Huawei Device Co., Ltd., Shenzhen, Guangdong 518129 (CN)
(72) Inventor: GAO, Chunyu, Shenzhen Guangdong 518129 (CN)
(74) Representative: Pfenning, Meinig & Partner mbB
(86) International application number: PCT/CN2012/087956
(87) International publication number: WO 2013/135091

(56) References cited:
- EP-A1- 1 673 958
- EP-A2- 1 679 641
- CN-A- 101 534 299
- CN-A- 101 902 740
- CN-A- 102 625 289

## Description

### TECHNICAL FIELD

The present invention relates to the field of wireless communications, and in particular, to a method and a mobile terminal for activating an InSIM chip in a mobile terminal.

### BACKGROUND

An InSIM chip is an alternate embedded SIM solution. By welding an InSIM chip in an interior of a mobile terminal such as a mobile phone or a wireless WAN card, functions of a conventional SIM card can be fully implemented and a size of the mobile terminal can be effectively reduced. An InSIM chip cannot be separated from a mobile terminal, so the InSIM chip can only be bound to a mobile terminal for sale and use.

Currently, when a mobile terminal adopting an InSIM chip is sold, the InSIM chip can be activated and activation information is written into the InSIM chip. During activation, pins of the InSIM chip need to be led to a surface of the mobile terminal and an extra test point needs to be set. The activation of the InSIM chip is performed by using the extra test point,but the set extra test point is not conducive to control of the mobile terminal size.
EP 1679641 A2 discusses a memory card of one published standard, such as the Multi-Media Card (MMC) or Secure Digital Card (SD) modified to include a Subscriber Identity Module (SIM) according to another published standard. The controller of the memory card communicates between electrical contacts on the outside of the card and both the memory and the SIM. In one specific form, the memory card has the physical configuration of the current Plug-in SIM card with a few external contacts added to accommodate the memory controller and data memory. In another specific form, the memory card has the physical configuration of the current SD card, including external contacts.

### SUMMARY

To resolve a problem that an extra test point needs to be set to activate an InSIM chip, embodiments of the present invention provide a method and a mobile terminal for activating an InSIM chip in a mobile terminal.

In one aspect, an embodiment of the present invention provides a mobile terminal, including:
an integrated Subscriber Identity Module (InSIM) chip;
a secure digital input/output SDIO port, configured to receive an InSIM chip activation command;
a connection controller, configured to receive the InSIM chip activation command through the SDIO port, and establish a connection between the SDIO port and an InSIM chip according to the InSIM chip activation command; wherein
the InSIM chip is configured to obtain activation information from an external device through the connection.

In another aspect, an embodiment of the present invention further provides a method for activating an InSIM chip in a mobile terminal, where the mobile termimal at least includes a secure digital input/output SDIO port and an integrated Subscriber Identity Module (InSIM) chip, including:
receiving, by the mobile terminal, an InSIM chip activation command through the SDIO port; and
establishing, by the mobile terminal, a connection between the SDIO port and the InSIM chip according to the InSIM chip activation command, so as to enable the InSIM chip to obtain activation information from an external device through the connection.

Embodiments of the present invention bring the following beneficial effects:
In the method and the mobile terminal for activating an InSIM chip in a mobile terminal provided by embodiments of the present invention, an InSIM chip is activated by using an existing SDIO port on a mobile terminal. This activation method does not require an extra test point, does not increase a size of the mobile terminal, and is conducive to electrostatic discharge protection.

### BRIEF DESCRIPTION OF DRAWINGS

The following further describes the specific embodiments of the present invention in detail with reference to accompanying drawings. In the accompanying drawings:
FIG. 1 is a schematic structural diagram of a mobile terminal provided by an embodiment of the present invention;
FIG. 2A is a schematic structural diagram of a wireless WAN card in a form of an SD card provided by an embodiment of the present invention;
FIG. 2B is another schematic structural diagram of a wireless WAN card in a form of an SD card provided by an embodiment of the present invention;
FIG. 3 is a schematic flowchart of a method for activating an InSIM chip in a mobile terminal provided by an embodiment of the present invention; and
FIG. 4 is another schematic flowchart of a method for activating an InSIM chip in a mobile terminal provided by an embodiment of the present invention.

### DESCRIPTION OF EMBODIMENTS

Embodiments of the present invention provide a method and a mobile terminal for activating an InSIM chip in a mobile terminal, to resolve a problem in the prior art that an extra test point needs to be set to activate an InSIM chip.

It should be noted that a mobile terminal described in the embodiments of the present invention may be a mobile terminal embedded with an InSIM chip, such as a wireless WAN card, a mobile phone, or a tablet. In some embodiments of the present invention, a wireless WAN card in a form of an SD card is used as an example for description, but the present invention is not limited thereto.

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

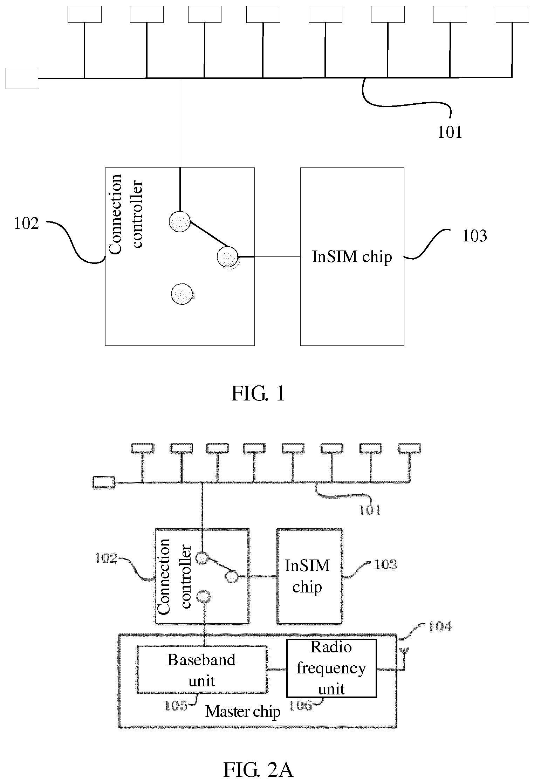

Referring to FIG. 1, an embodiment of the present invention provides a mobile terminal, including:
an SDIO port 101, configured to receive an InSIM chip activation command;
the mobile terminal may connect, through its SDIO port, to a computer or another external device that supports SDIO communication. The connection may be implemented by using an SDIO-USB conversion device;
a connection controller 102, configured to receive the InSIM chip activation command through the SDIO port, and establish a connection between the SDIO port and an InSIM chip according to the InSIM chip activation command; and
an InSIM chip 103, configured to receive activation information through the connection.

The InSIM chip obtains the activation information from an external device such as a computer through the connection, completes activation according to the activation information, and implements a function of a SIM (Subscriber Identity Module, subscriber identity module) card. It should be noted that if the InSIM chip activation command already includes the activation information, the InSIM chip can directly extract the activation information from the InSIM chip activation command. The activation information may include an international mobile subscriber identity IMSI, a Ki, a short message center number, and an OTA (Over-the-Air Technology, over-the-air technology) coefficient, where Ki is unique customer authentication key data corresponding to the IMSI.

In the embodiment of the present invention, the connection controller 102 uses an existing SDIO port 101 to receive an InSIM chip activation command, and establishes a connection between the SDIO port101 and an InSIM chip103 according to the InSIM chip activation command, so as to enable the InSIM chip to obtain activation information through the connection and complete the InSIM chip activation. This activation method does not require an extra test point, does not increase a size of a mobile terminal, and is conducive to electrostatic discharge protection.

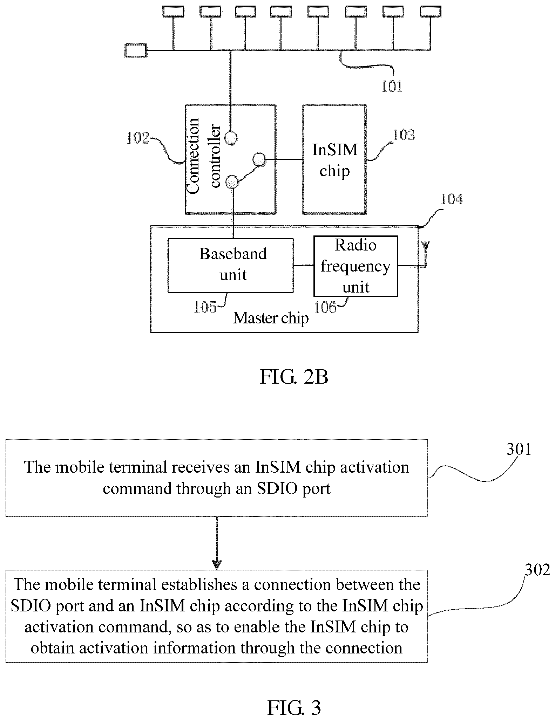

To further describe a solution of an embodiment of the present invention in detail, a wireless WAN card, which is in a form of an SD card and includes 9 SDIO port pins, is used as an example. Referring to FIG. 2A and FIG. 2B, FIG. 2A is a schematic structural diagram of a wireless WAN card, which is in a form of an SD card, in an InSIM chip activation process, and FIG. 2B is a schematic structural diagram of a wireless WAN card, which is in a form of an SD card, in normal use.

Optionally, the wireless WAN card in a form of an SD card may further include a master chip 104. The master chip 104 may further include a baseband unit 105 and a radio frequency unit 106, where the baseband unit 105 is configured to process wireless communication signals, and the radio frequency unit 106 is configured to receive and send wireless analog signals, and complete conversion between analog signals and digital signals. Details are not described herein again.

Referring to FIG. 2B, when the wireless WAN card in a form of an SD card is working properly, the master chip 104 is connected to the InSIM chip 103 by using the connection controller 102. Specifically, the baseband unit 105 is connected to the InSIM chip 103 by using the connection controller 102, and the InSIM chip 103 is disconnected from the SDIO port 101.

Optionally, after the connection controller 102 receives the InSIM chip activation command through the SDIO port 101, the connection controller 102 may end the connection between the InSIM chip103 and the master chip104, to prevent possible signal interference during the InSIM card chip activation and further save power.

Optionally, after the InSIM chip obtains the activation information through the connection, the connection controller 102 receives an InSIM chip activation end command through the SDIO port, and according to the InSIM chip activation end command, interrupts a communication link between the InSIM chip and the SDIO port and establishes a connection between the InSIM chip and the master chip, so as to enable the wireless WAN card in a form of an SD card to work properly.

Further, the connection controller may specifically be a bridge chip, which further helps reduce the size of a mobile terminal. The connection controller may specifically include a switch, which is configured to establish or end a connection between the SDIO port 101 and the master chip 104 by controlling an InSIM signal flow direction; and is further configured to establish or end a connection between the SDIO port and the InSIM chip by controlling an SDIO signal flow direction.

The switch may specifically be a hardware switch, and may also be a switch in a software simulation form such as a single-pole, double-throw switch, a single-chip switch, or an FPGA (Field Programmable Gate Array, field programmable gate array) switch. A common FPGA switch implements a switch function by implementing combination logic with corresponding programming settings such as a small lookup table (16×1RAM).

In the embodiment of the present invention, the connection controller 102 including a switch is used to establish a connection between the SDIO port and the InSIM chip, so that the InSIM chip activation is completed through the connection, which does not require an extra test point, does not increase a size of a mobile terminal, and is conducive to electrostatic discharge protection. In addition, a connection between the InSIM chip and the master chip is ended during the activation, and the connection is restored after the activation is complete, which prevents possible signal interference during the InSIM card activation and further saves power.

Referring to FIG. 3, an embodiment of the present invention further provides a method for activating an InSIM chip in a mobile terminal, including:

Step 301: The mobile terminal receives an InSIM chip activation command through an SDIO port.

The mobile terminal may connect, through its SDIO port, to a computer or another external device that supports SDIO communication. The connection may be implemented by using an SDIO-USB conversion device.

Step 302: The mobile terminal establishes a connection between the SDIO port and an InSIM chip according to the InSIM activation command, so as to enable the InSIM chip to obtain activation information through the connection.

Specifically, the InSIM chip obtains the activation information from an external device such as a computer through the connection, completes activation according to the activation information, and implements a function of a SIM (Subscriber Identity Module, subscriber identity module) card. It should be noted that if the InSIM chip activation command already includes the activation information, the InSIM chip can directly extract the activation information from the InSIM chip activation command. The activation information may include an international mobile subscriber identity IMSI, a Ki, a short message center number, and an OTA (Over-the-Air Technology, over-the-air technology) coefficient, where Ki is unique customer authentication key data corresponding to the IMSI.

In the embodiment of the present invention, an InSIM chip is activated through an SDIO port of a mobile terminal, which does not require an extra InSIM chip test point on an exterior of the mobile terminal, does not increase a size of the mobile terminal, and is conducive to electrostatic discharge protection.

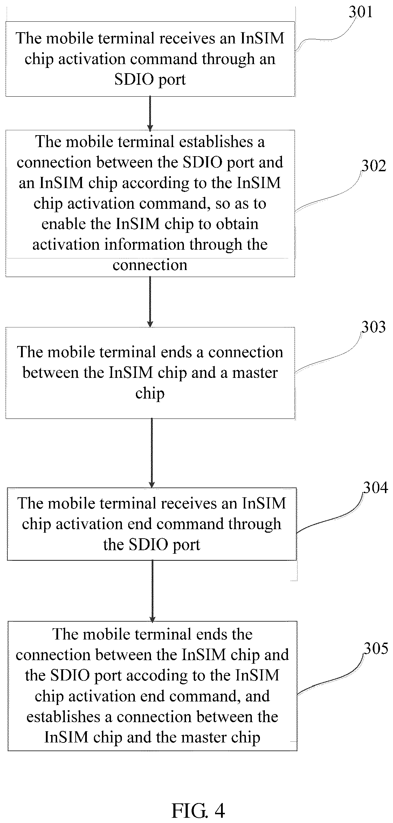

Referring to FIG. 4, a solution of an embodiment of the present invention is further described in detail.

Optionally, the mobile terminal further includes a master chip, and the master chip is connected to the InSIM chip before the mobile terminal receives an InSIM chip activation command; after the mobile terminal receives an InSIM chip activation command through an SDIO port, the method further includes:

Step 303: The mobile terminal ends a connection between the InSIM chip and the master chip, thereby preventing possible signal interference during InSIM card activation and further saving power.

Optionally, after the InSIM chip obtains the activation information through the connection, the method further includes:

Step 304: The mobile terminal receives an InSIM chip activation end command through the SDIO port.

Step 305: The mobile terminal ends the connection between the InSIM chip and the SDIO port according to the InSIM chip activation end command, and establishes a connection between the InSIM chip and the master chip, so as to enable the wireless WAN card in a form of an SD card to work properly.

In the embodiment of the present invention, a connection between the SDIO port and the InSIM chip is established, so that the InSIM chip activation is completed through the connection, which does not require an extra test point, does not increase a size of a mobile terminal, and is conducive to electrostatic discharge protection. In addition, a connection between the InSIM chip and the master chip is ended during the activation, and the connection is restored after the activation is complete, which prevents possible signal interference during the InSIM card activation and further saves power.

It should be noted that although a specific application scenario of the InSIM chip in the embodiments is that the InSIM chip is placed in a mobile terminal, this shall be not construed as a limitation on a specific application of an InSIM chip. In other application scenarios, the solution of activating an InSIM chip in the embodiments of the present invention is also applicable to a terminal in another form as long as the terminal supports SDIO port communication.

Persons skilled in the art may clearly understand that for description convenience and brevity, for method embodiments described above, reference may be made to a working process of a corresponding mobile terminal in the foregoing apparatus embodiment, and details are not described herein again.

In the several embodiments provided in the present application, it should be understood that the disclosed apparatus may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units and devices in the embodiments of the present invention may be integrated into one processing unit, or each unit may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing specific embodiments further describe objectives, technical solutions, and beneficial effects of the present invention. It should be understood that the foregoing descriptions are merely specific embodiments of the present invention, but are not intended to limit the protection scope of the present invention. Any modification, equivalent replacement, and improvement made within the principle of the present invention shall fall within the protection scope of the present invention.

## Claims

1. A mobile terminal, comprising:
an integrated Subscriber Identity Module, InSIM, chip (103);
a secure digital input/output SDIO port (101), configured to receive an InSIM chip (103) activation command; and
a connection controller (102), configured to receive the InSIM chip (103) activation command through the SDIO port (101), and establish a connection between the SDIO port (101) and an InSIM chip (103) according to the InSIM chip (103) activation command;
wherein the InSIM chip (103) is configured to obtain activation information from an external device through the connection.

2. The mobile terminal according to claim 1, further comprising a master chip (104), wherein:
the connection controller (102) is further configured to end a connection between the InSIM chip (103) and the master chip (104) after receiving the InSIM chip (103) activation command through the SDIO port (101).

3. The mobile terminal according to claim 2, wherein:
the connection controller (102) is further configured to receive an InSIM chip (103) activation end command through the SDIO port (101) after the InSIM chip (103) obtains the activation information through the connection, interrupts a communication link between the InSIM chip (103) and the SDIO port (101) according to the InSIM chip (103) activation end command, and establishes a connection between the InSIM chip (103) and the master chip (104).

4. The mobile terminal according to any one of claims 1 to 3, wherein the connection controller (102) is a chip.

5. The mobile terminal according to any one of claims 2 to 4, wherein:
the connection controller (102) comprises a switch, which is configured to establish or end a connection between the SDIO port (101) and the master chip (104) by controlling an InSIM signal flow direction; and is further configured to establish or end a connection between the SDIO port (101) and the InSIM chip (103) by controlling an SDIO signal flow direction.

6. The mobile terminal according to claim 5, wherein:
the switch is a single-pole, double-throw switch, or a single-chip switch, or a field programmable gate array FPGA switch.

7. The mobile terminal according to any one of claims 1 to 6, wherein the mobile terminal is a wireless WAN card in a form of a secure digital SD card.

8. A method for activating an InSIM chip in a mobile terminal, wherein the mobile terminal at least comprises an SDIO port (101) and an integrated Subscriber Identity Module, InSIM, chip (103), the method comprising the following steps:
receiving (301), by the mobile terminal, an InSIM chip (103) activation command through the SDIO port (101) and
establishing (302), by the mobile terminal, a connection between the SDIO port (101) and the InSIM chip (103) according to the InSIM chip (103) activation command, so as to enable the InSIM chip (103) to obtain activation information from an external device through the connection.

9. The method according to claim 8, wherein:
the mobile terminal further comprises a master chip (104); and
after the mobile terminal receives the InSIM chip (103) activation command, the method further comprises:
ending (303), by the mobile terminal, a connection between the InSIM chip (103) and the master chip (104).

10. The method according to claim 8, after the InSIM chip (103) obtains the activation information through the connection, further comprising:
receiving (304), by the mobile terminal, an InSIM chip (103) activation end command through the SDIO port (101); and
ending (305), by the mobile terminal, the connection between the InSIM chip (103) and the SDIO port (101) according to the InSIM chip (103) activation end command, and establishing a connection between the InSIM chip (103) and the master chip (104).

## Patentansprüche

1. Mobilendgerät, das Folgendes umfasst:
einen Integriertes-Teilnehmeridentitätsmodul-bzw. InSIM-Chip (InSIM: Integrated Subscriber Identity Module) (103);
einen Sichere-digitale-Eingabe/Ausgabe- bzw. SDIO-Port (SDIO: Secure Digital Input/Output) (101), der zum Empfangen eines Aktivierungsbefehls für einen InSIM-Chip (103) konfiguriert ist; und
eine Verbindungssteuerung (102), die zum Empfangen des Aktivierungsbefehls für einen InSIM-Chip (103) durch den SDIO-Port (101) und zum Einrichten einer Verbindung zwischen dem SDIO-Port (101) und einem InSIM-Chip (103) gemäß dem Aktivierungsbefehl für einen InSIM-Chip (103) konfiguriert ist;
wobei der InSIM-Chip (103) zum Erhalten von Aktivierungsinformationen von einer externen Vorrichtung durch die Verbindung konfiguriert ist.

2. Mobilendgerät nach Anspruch 1, das ferner einen "Master"-Chip (104) umfasst, wobei:
die Verbindungssteuerung (102) ferner zum Beenden einer Verbindung zwischen dem InSIM-Chip (103) und dem "Master"-Chip (104) nach dem Empfangen des Aktivierungsbefehls für den InSIM-Chip (103) durch den SDIO-Port (101) konfiguriert ist.

3. Mobilendgerät nach Anspruch 2, wobei:
die Verbindungssteuerung (102) ferner zum Empfangen eines Aktivierungsendbefehls für einen InSIM-Chip (103) durch den SDIO-Port (101), nachdem der InSIM-Chip (103) die Aktivierungsinformationen durch die Verbindung erhalten hat, konfiguriert ist, eine Kommunikationsverbindung zwischen dem InSIM-Chip (103) und dem SDIO-Port (101) gemäß dem Aktivierungsendbefehl für einen InSIM-Chip (103) unterbricht und eine Verbindung zwischen dem InSIM-Chip (103) und dem "Master"-Chip (104) einrichtet.

4. Mobilendgerät nach einem der Ansprüche 1 bis 3, wobei die Verbindungssteuerung (102) ein Chip ist.

5. Mobilendgerät nach einem der Ansprüche 2 bis 4, wobei:
die Verbindungssteuerung (102) einen Schalter umfasst, der zum Einrichten oder Beenden einer Verbindung zwischen dem SDIO-Port (101) und dem "Master"-Chip (104) durch Steuern einer InSIM-Signal-Flussrichtung konfiguriert ist; und ferner zum Einrichten oder Beenden einer Verbindung zwischen dem SDIO-Port (101) und dem InSIM-Chip (103) durch Steuern einer SDIO-Signal-Flussrichtung konfiguriert ist.

6. Mobilendgerät nach Anspruch 5, wobei:
der Schalter ein einpoliger Umschalter oder ein Einzelchip-Schalter oder ein Vor-Ort-programmierbares-Gate-Array- bzw. FPGA-Schalter (FPGA: Field Programmable Gate Array) ist.

7. Mobilendgerät nach einem der Ansprüche 1 bis 6, wobei das Mobilendgerät eine Drahtlos-WAN-Karte in Form einer sicheren digitalen SD-Karte ist.

8. Verfahren zum Aktivieren eines InSIM-Chips in einem Mobilendgerät, wobei das Mobilendgerät wenigstens einen SDIO-Port (101) und einen Integriertes-Teilnehmeridentitätsmodul- bzw. InSIM-Chip (103) umfasst, wobei das Verfahren die folgenden Schritte umfasst:
Empfangen (301) durch das Mobilendgerät eines Aktivierungsbefehls für einen InSIM-Chip (103) durch den SDIO-Port (101), und
Einrichten (302) durch das Mobilendgerät einer Verbindung zwischen dem SDIO-Port (101) und dem InSIM-Chip (103) gemäß dem Aktivierungsbefehl für einen InSIM-Chip (103), so dass ermöglicht wird, dass der InSIM-Chip (103) Aktivierungsinformationen von einer externen Vorrichtung durch die Verbindung erhält.

9. Verfahren nach Anspruch 8, wobei:
das Mobilendgerät ferner einen "Master"-Chip (104) umfasst; und
das Verfahren, nachdem das Mobilendgerät den Aktivierungsbefehl für einen InSIM-Chip (103) empfangen hat, ferner Folgendes umfasst:
Beenden (303) einer Verbindung zwischen dem InSIM-Chip (103) und dem "Master"-Chip (104) durch das Mobilendgerät.

10. Verfahren nach Anspruch 8, das, nachdem der InSIM-Chip (103) die Aktivierungsinformationen durch die Verbindung erhalten hat, ferner Folgendes umfasst:
Empfangen (304) durch das Mobilendgerät eines Aktivierungsendbefehls für einen InSIM-Chip (103) durch den SDIO-Port (101); und
Beenden (305) durch das Mobilendgerät der Verbindung zwischen dem InSIM-Chip (103) und dem SDIO-Port (101) gemäß dem Aktivierungsendbefehl für einen InSIM-Chip (103) und Einrichten einer Verbindung zwischen dem InSIM-Chip (103) und dem "Master"-Chip (104).

## Revendications

1. Terminal mobile, comprenant :
une puce à module d'identité de souscripteur intégré, InSIM (103) ;
un port d'entrée/sortie numérique sécurisé SDIO (101), configuré pour recevoir une commande d'activation de puce InSIM (103) ; et
un contrôleur de connexion (102), configuré pour recevoir la commande d'activation de puce InSIM (103) par le biais du port SDIO (101), et établir une connexion entre le port SDIO (101) et une puce InSIM (103) conformément à la commande d'activation de puce InSIM (103) ;
dans lequel la puce InSIM (103) est configurée pour obtenir des informations d'activation auprès d'un dispositif externe par le biais de la connexion.

2. Terminal mobile selon la revendication 1, comprenant en outre une puce maîtresse (104), dans lequel :
le contrôleur de connexion (102) est également configuré pour interrompre une connexion entre la puce InSIM (103) et la puce maîtresse (104) après réception de la commande d'activation de puce InSIM (103) par le biais du port SDIO (101).

3. Terminal mobile selon la revendication 2, dans lequel :
le contrôleur de connexion (102) est également configuré pour recevoir une commande d'interruption d'activation de puce InSIM (103) par le biais du port SDIO (101) après que la puce InSIM (103) a obtenu les informations d'activation par le biais de la connexion, interrompt une liaison de communication entre la puce InSIM (103) et le port SDIO (101) conformément à la commande d'interruption d'activation de puce InSIM (103), et établit une connexion entre la puce InSIM (103) et la puce maîtresse (104).

4. Terminal mobile selon l'une quelconque des revendications 1 à 3, dans lequel le contrôleur de connexion (102) est une puce.

5. Terminal mobile selon l'une quelconque des revendications 2 à 4, dans lequel :
le contrôleur de connexion (102) comprend un commutateur, qui est configuré pour établir ou interrompre une connexion entre le port SDIO (101) et la puce maîtresse (104) en contrôlant une direction de circulation du signal InSIM ; et est également configuré pour établir ou interrompre une connexion entre le port SDIO (101) et la puce InSIM (103) en contrôlant une direction de circulation du signal SDIO.

6. Terminal mobile selon la revendication 5, dans lequel :
le commutateur est un commutateur unipolaire bidirectionnel, ou un commutateur monopuce, ou un commutateur à réseau prédiffusé programmable par l'utilisateur FPGA.

7. Terminal mobile selon l'une quelconque des revendications 1 à 6, le terminal mobile étant une carte sans fil WAN sous la forme d'une carte numérique sécurisée SD.

8. Procédé d'activation d'une puce InSIM dans un terminal mobile, le terminal mobile comprenant au moins un port SDIO (101) et une puce à module d'identité de souscripteur intégré, InSIM (103), le procédé comprenant les étapes suivantes :
la réception (301), par le terminal mobile, d'une commande d'activation de puce InSIM (103) par le biais du port SDIO (101) et
l'établissement (302), par le terminal mobile, d'une connexion entre le port SDIO (101) et la puce InSIM (103) conformément à la commande d'activation de puce InSIM (103), de manière à permettre à la puce InSIM (103) d'obtenir des informations d'activation auprès d'un dispositif externe par le biais de la connexion.

9. Procédé selon la revendication 8, dans lequel :
le terminal mobile comprend en outre une puce maîtresse (104) ; et
après que le terminal mobile a reçu la commande d'activation de puce InSIM (103), le procédé comprend en outre :
l'interruption (303), par le terminal mobile, d'une connexion entre la puce InSIM (103) et la puce maîtresse (104).

10. Procédé selon la revendication 8, comprenant en outre, après que la puce InSIM (103) a obtenu les informations d'activation par le biais de la connexion :
la réception (304), par le terminal mobile, d'une commande d'interruption d'activation de puce InSIM (103) par le biais du port SDIO (101) ; et
l'interruption (305), par le terminal mobile, de la connexion entre la puce InSIM (103) et le port SDIO (101) conformément à la commande d'interruption d'activation de puce InSIM (103), et l'établissement d'une connexion entre la puce InSIM (103) et la puce maîtresse (104).
